Europäisches Patentamt

European Patent Office

Office européen des brevets

(11) Publication number:
**0 031 245**
**B1**

(12) **EUROPEAN PATENT SPECIFICATION**

(45) Date of publication of patent specification: **19.09.84**

(21) Application number: **80304588.9**

(22) Date of filing: **18.12.80**

(51) Int. Cl.³: **C 08 L 95/00, C 08 L 23/26, C 08 K 5/57**

(54) Blends of polymers and bituminous material, articles therefrom, and process for making the articles.

(30) Priority: **19.12.79 GB 7943646**

(43) Date of publication of application:
**01.07.81 Bulletin 81/26**

(45) Publication of the grant of the patent:
**19.09.84 Bulletin 84/38**

(84) Designated Contracting States:
**BE DE FR GB IT NL SE**

(56) References cited:
**US-A-3 031 426**
**US-A-3 167 527**

(73) Proprietor: **The British Petroleum Company p.l.c.**
**Britannic House Moor Lane**
**London EC2Y 9BU (GB)**

(72) Inventor: **Weeks, Brian**
**The British Petroleum Co.Ltd. Chertsey Road**
**Sunbury-on-Thames Middlesex TW16 7LN (GB)**

(74) Representative: **Ryan, Edward Terrence et al**
**c/o The British Petroleum Company plc Patents**
**Division Chertsey Road**
**Sunbury-on-Thames Middlesex, TW16 7LN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to improved elastomer compositions, the process for forming such compositions into articles and to the articles so obtained.

It is disclosed in GB 1 531 872 that blends of a bituminous material known as hardened extract and a synthetic chlorine containing elastomer, namely chlorosulphonated polyethylene may be formed into sheets or membranes, for example by forming the sheet between rollers. Such sheets may be used for example as roof coverings.

Internal stresses are introduced during the manufacture of the sheet which can give rise to shrinkage when the sheet becomes warm in service, e.g. on exposure to sunlight. In order to relieve these stresses we have found it is desirable to subject the sheet to an annealing step at elevated temperature.

An important physical property of the sheet is its brittle temperature. It is desirable for the sheet to have as low a brittle temperature as possible. For some purposes for which the sheets can be used national standards specify that the bittle temperature must be below a given value. However we have found that the annealing step necessary to improve one physical property namely shrinkage, adversely affects another physical property, namely brittle temperature.

US 3 575 779 discloses a roofing material based on chlorinated polyethylene. There is no mention of the use of bitumen or other petroleum derivatives as a filler or extender. The specification states that a stabilizer is necessary in the membrane formulation to provide resistance to the heat which arises during the processing of the formulation into a membrane. The stabilizer also acts as an antioxidant. The stabilizers exemplified are an epoxy stabiliser, a hindered phenol, and sorbitol and pentaerythritol. There is no suggestion that metal stabilizers should be used.

GB 1 477 118 discloses a primer for an asphalt based coating. The primer consists of chlorinated rubber and pitch and contains a stabilizer to protect the chlorinated rubber against deterioration during storage. The only stabilizer mentioned is epichlorhydrin. The stabilizers used to protect rubbers against storage are quite different from the metal salts used to give heat stability to vinyl chloride polymers. Primer compositions are not required to be self supporting and therefore are not subjected to the conditions which arise in the production of membranes by for example calendering.

GB 1 250 756 discloses a composition which comprises bitumen or pitch of mineral origin and a chlorinated polyethylene resin. The specification states that the composition preferably also comprises a stabiliser for chlorinated polyethylene. Suitable stabilisers are stated to be those commonly used to stabilise polyvinyl chloride. The stabilisers specifically mentioned are salts of cadmium, lead, barium and calcium and epoxidised oils.

However we have found that the addition of metal containing stabilisers such as those mentioned in GB 1 250 756 to blends of bituminous material and synthetic chlorine-containing elastomers e.g. barium/cadmium based stabilisers has an averse effect on brittle temperature i.e. the brittle temperature is higher, even before any annealing step is carried out. Brittle temperature is an extremely important characteristic of material intended for the formation of waterproof sheets particularly for roofing. In some countries national standards for such sheets specify minimum brittle temperatures which must be achieved. It appears therefore that the use of metal containing stabilisers should be avoided in blends of bituminous material and synthetic chlorine containing elastomer, particularly in blends intended to be formed into roofing sheets or membranes.

We have surprisingly found that by selecting a narrow class of metal-containing stabilisers it is possible to produce compositions which show no significant increase in brittle temperature before annealing and which considerably reduce the increase in brittle temperature after annealing.

According to the present invention there is provided a blend of a chlorine-containing synthetic elastomer, a bituminous material of softening point in excess of 80°C and an asphaltene content in excess of 25% by weight, characterised in that the blend contains a dialkyl tin derivative of a dicarboxylic acid.

Chlorine-containing elastomer

Examples of suitable chlorine-containing elastomers are chlorosulphonated polyethylene, chlorinated polyethylene, and polychloroprene.

Chlorosulphonated polyethylene elastomers are made by treating polyethylene with chlorine and sulphur dioxide to give a product containing —Cl and —SO₂Cl groups. Chlorosulphonated polyethylene elastomers are commercially available under the trade name "Hypalon" 35 (Regd. Trade Mark) from E I DuPont de Nemours & Co. Inc. Information on these polymers is given in Volume 7 page 6 line 5 of "Encyclopedia of Chemical Technology" edited by Kirk-Othmer Second Edition.

Chlorinated polyethylene elastomers are made by treating polyethylene with chlorine. The chlorinated polyethylene may for example have a chlorine content of from 20 to 48% by weight.

It is preferred to use chlorinated polyethylene based on high density polyethylene having chlorine contents of from 25 to 40% by weight chlorine.

It is preferred to use mixtures of chlorosulphonated and chlorinated polyethylene.

Polychloroprene elastomers may be homopolymers but may optionally contain units derived from a comonomer. Thus comonomers such as styrene, or 2,3-dichlorobutadiene may be used to modify such polymer properties as rate of crystallisation. The quantity of comonomer used preferably is not more than 50% by weight of the total monomeric material, or preferably not more than 10% by weight of the monomeric material. The polychloroprene used in the process of the present invention may be any polychloroprene capable of being vulcanised. It may be a sulphur modified polychloroprene, or a polychloroprene made using a mercaptan modifier, e.g. dodecyl mercaptan, or a dialkyl xanthogen disulphide e.g. diethyl xanthogen disulphide.

The Mooney viscosity of the polychloroprene may vary over a moderately wide range for example 15 to 75. The Mooney viscosity may typically be in the range 45—55.

The bituminous material

Various petroleum derivatives are available which have characteristics similar to bitumen and which have the required softening point and asphaltenes content. They include certain blown bitumens, i.e. bitumens which have been modified by blowing in air at elevated temperatures and blown propane precipitated asphalt. However it is preferred to use "hardened extract".

Throughout this specification 'hardened extract' means a material obtained by blowing a gas containing free oxygen into a petroleum extract at elevated temperatures, the petroleum extract having been obtained by the solvent extract of a product of petroleum refining which is a distillate petroleum fraction or a de-asphalted petroleum residue or of a blend of this de-asphalted residue and distillate, which product boils above 350°C at atmospheric pressure and which contains a major proportion of aromatic hydrocarbons.

The product of petroleum refining subject to solvent extraction may be for example a vacuum distillate obtained by vacuum distillation of a residue from an atmospheric pressure distillation. Alternatively the product of petroleum refining may be obtained from vacuum residue (the residue of the vacuum distillation referred to above) after asphaltenes have been removed by precipitation with liquid propane. The solvent extract to give a product containing a major proportion of aromatic hydrocarbons may be carried out on mixtures of distillates and residues.

The product of petroleum refining from which the petroleum extract is obtained is preferably a vacuum distillate boiling in the lubricating oil range e.g. at a temperature in the range 350°C to 600°C. Such vacuum distillates are well known to those skilled in the art.

The elevated temperature at which the gas containing free oxygen e.g. air is blown into the petroleum extract may for example be 250°C to 350°C.

Examples of solvents which may be used to extact the distillate petroleum fraction are furfural, phenol and N-methyl pyrrolidone. The product subjected to extract is substantially free from asphaltenes, and this extraction process must be distinguished from the use of, for example, liquid propane to obtain a product rich in asphaltenes from residues, which is sometimes described as a 'solvent' process.

Examples of such petroleum extracts are materials sold under the designation 'Enerflex' (Regd. Trade Mark) Process Oils by BP Oil Limited, London. Particular examples of petroleum extracts suitable for air blowing are Enerflex 65 and Enerflex 96 particularly Enerflex 96. It is preferred that the hardened extract is prepared from a petroleum extract having a content of 'saturates' and 'aromatics' as determined by molecular-type analysis (clay-gel) ASTM D2007, of less than 15% by weight more preferably less than 10% by weight for saturates and preferably greater than 75% by weight, more preferably greater than 80% by weight for aromatics.

The 'hardened extract' resulting from the air blowing referred to above is a solid material at room temperature. In order to obtain a hardened extract having the desired low content of saturated hydrocarbon it may be necessary to select a petroleum extract in which the saturated hydrocarbon content is low. The choice of a suitable petroleum extract can readily be made by the man skilled in the art on the basis of simple tests. The blowing with air may be carried out in the presence of a catalyst e.g. a metal halide Freidel-Crafts catalyst such as ferric chloride, or without a catalyst.

The hardened extracts used in the present invention are to be distinguished from bitumens by the fact that they are made by a process which involves the production of a product which is substantially free of asphaltenes by either distillation or by de-asphalting a residue, followed by a solvent extraction, the asphaltenes only being introduced by the blowing with gas containing free oxygen. When crude oil is distilled to remove materials boiling up to the end of the gas oil range, the resulting residue, known as atmospheric residue, can be subjected to vacuum distillation to recover waxy distillates. The residue from this vacuum distillation is known as vacuum residue. The bitumen may be obtained directly from this residue or the residue may be air blown to produce a low penetration bitumen. Alternatively residue (either atmospheric or vacuum may be treated with for example liquid propane to precipitate a bitumen layer. In all these cases the asphaltenes in the bitumen comes directly from the residue, and there is no intermediate formation of an intermediate material substantially free of asphaltenes.

The stabilizer

The alkyl group may be $C_6$—$C_{10}$ and is preferably octyl. The carboxylic acid is preferably maleate and the preferred stabilizer is dioctyl tin dimaleate, which is sold under the name Stanclere T80 by AKZO Chemie.

## 0 031 245

Optional additional ingredients

The compositions of the present invention may also contain fillers that are commonly used in reinforcing rubber e.g. calcium carbonate, carbon black, titanium dioxide, clay etc. The use of these fillers can improve tear strength of the blend. Fibrous fillers such as asbestos, cotton, polyester fibres, rayon fibres etc., may also be used.

The compositions of the present invention may also contain certain plasticizers providing these are compatible with the compositions i.e. do not readily separate from the composition after being mixed with it. Examples of such plasticizers are aromatic extracts (this being the materal from which hardened extract is prepared), chlorinated paraffins for example those having from 12 to 30 carbon atoms in the molecule, and esters for example di-2-ethylhexyl phthalate.

The compositions of the present invention may contain aliphatic amines and amides having 8 to 24 carbon atoms in the molecule to assist in reducing sticking when the composition is formed between rollers and in subsequent storage.

Vulcanisation

Some of the compositions according to the invention are satisfactory without vulcanisation. If additional strength is required in the membranes formed from the compositions of the present invention, vulcanising agents may be incorporated in the compositions and the membranes subjected to vulcanisation by heating. Where a sheet or membrane is to be formed between rollers from a composition containing a vulcanisation agent which vulcanises the composition when heated it is preferred to add the vulcanising agent at a late stage in the preparation of the composition on for example a Banbury mixer to avoid premature vulcanisation. The vulcanisation step can be carried out by heating the sheet formed between rollers to a temperature greater than that used in the roller forming step and which is sufficient to cause vulcanisation. Suitable vulcanisation agents for different rubbers are well known.

Compositions containing chlorosulphonated polyethylene usually give products with good properties without vulcanisation. However polybasic metal oxides may be incorporated in such compositions to produce a slow vulcanisation at ambient temperatures in the presence of water.

Relative quantities of ingredients

The relative weights of chlorine containing synthetic elastomer and bituminous material used in the compositions of the present invention may vary over a wide range but preferably the weight of bituminous material present is not more than 300% of the total weight of synthetic chlorine-containing elastomer, more preferably not more than 200%, and is preferably not less than 75% of the total weight of synthetic chloride-containing elastomer, more preferably not less than 100% of the total weight of elastomer.

The quantity of dialkyl tin derivative of dicarboxylic acid incorporated into the blend may for example be 0.1 to 5, preferably 0.4 to 2, more preferably 0.5 to 1.5% by weight, based on total synthetic chlorine-containing elastomer content.

The quantity of any aliphatic amine and/or amide present may for example be 0.03 to 3% wt/wt, based on weight of total composition, preferably 0.1 to 1% wt/wt.

The quantity of particulate filler, if present is preferably in the range 1 to 250, more preferably 10 to 150, parts per hundred parts chlorine-containing synthetic elastomer.

The quantity of plasticiser, if present, is preferably in the range 1 to 50, more preferably 5 to 25, parts per hundred parts synthetic chlorine-containing elastomer.

The quantity of fibrous filler, if present is preferably in the range 1 to 50, more preferably 5 to 25, parts per hundred parts chlorine-containing synthetic elastomer.

Where a mixture of chlorosulphonated polyethylene and chlorinated polyethylene is used the weight ratio is preferably in the range 3:1 to 1:3.

The quantity of vulcanisation agent, if used, will be selected so as to give the desired degree of vulcanisation and the optimum amounts can be readily determined by those skilled in the art.

Preparation of the compositions

The compositions of the present invention may be prepared by any convenient method. Thus any of the methods used in compounding rubbers may be used e.g. Banbury mixer, 2 roll mill etc.

Production of sheets

The compositions of the present invention are particularly suitable for the production of sheets by forming between rollers. The process in which the sheet is formed between rollers may for example be calendering. Alternatively the sheets may be formed between rollers by using the process of roller-die extrusion. The processes of calendering and roller-die extrusion are well known in the art. The sheets are preferably formed between rollers at a temperature above 90°C, because at lower temperatures there is an increased problem with shrinkage of the sheet.

The invention will now be illustrated by reference to the following Examples.

4

Comparative Test A (not according to the invention)
The basic formulation used was:

|  | Parts by weight |
|---|---|
| Chlorosulphonated polyethylene | 50 |
| Chlorinated polyethylene | 50 |
| Bituminous material of softening point 120°C and asphaltene content 36% by wt., made by blowing and then heat treating a vacuum residue SFBP Pitch V 22292 | 85 |
| MT Carbon black | 40 |
| Octadecylamine | 0.5 |
| Oleamide | 0.5 |

A blend was prepared by mixing the above components in a Banbury mixer. The brittle temperature of the blend, before annealing was determined in accordance with DIN 53361. A sheet formed from the blend between rollers was annealed by heating it at 140°C for 4 hours in a hot air area and the brittle temperature was determined.
The results are shown in Table 1.

Comparative Test B (not according to the invention)
An experiment was carried out as in Test A but with 0.5 parts by weight commercially available liquid stabiliser containing Ba and Cd compounds being added to the blend during the mixing step. The results are shown in Table 1.

Example 1
An experiment was carried out as in Test A. However 0.5 parts by weight of a dioctyl tin dimaleate ester sold under the name Stanclere (Regd. Trade Mark) T80 was added to the blend during the mixing step. The results are given in Table 1.

TABLE 1

| | Added stabiliser | | | Brittle temperature | |
|---|---|---|---|---|---|
| Experiment | Trade Name | Chemical type | Amount (parts) | Before annealing (°C) | After annealing (°C) |
| A | — | — | 0 | −20 | −12.5 |
| B | Lankromark LC288 | Ba/Cd | 0.5 | −17.5 | −12.5 |
| 1 | Stanclere* T80 | tin maleate ester | 0.5 | −20 | −17.5 |

*Registered Trade Mark.

These results clearly show that the Ba/Cd stabiliser produced an increase in brittle temperature even before annealing. They also clearly show the substantially lower brittle temperature after annealing obtained using the stabiliser of the present invention.
The experiments set out below demonstrate the importance of the choice of the correct type of tin stabilizer.

Comparative Test C (not according to the invention)
An experiment was carried out as in Test B but using, in place of the Ba/Cd stabiliser, 0.2 parts of a diester dithio tin stabiliser sold under the trade name Stanclere (Regd. Trade Mark) 309.
The brittle temperature before annealing was measured and the results are given in Table 2.

5

# 0 031 245

Comparative Test D (not according to the invention)

An experiment was carried out as in Test C but using another diester dithio tin stabilizer sold under the name Stanclere (Regd. Trade Mark) T 308. The results are given in Table 2.

Example 2

An experiment was carried out as in Test C but using a dioctyl tin dimaleate ester sold under the name Stanclere (Regd. Trade Mark) T 80 as stabilizer. The results are shown in Table 2.

## TABLE 2

| Experiment | Added tin stabilizer | | | Brittle temperature before annealing (°C) |
|---|---|---|---|---|
| | Trade Name | Chemical type | Amount (parts) | |
| C | Stanclere* T 309 | diester dithio tin | 0.2 | −17.5 |
| D | Stanclere* T 308 | diester dithio tin | 0.2 | −17.5 |
| 2 | Stanclere* T 80 | dioctyl tin dimaleate ester | 0.2 | −20 |

*Regd. Trade Mark.

The blend containing no stabiliser had a brittle temperature of −20°C before annealing (see Test A, Table 1). Table 2 shows that the diesterdithio tin stabilisers, unlike the dioctyl tin dimaleate stabiliser, caused a reduction in brittle temperature even before annealing. Such thio tin stabilisers were therefore dismissed from further consideration as additives for reducing the rise in brittle temperature.

Test E

Experiments were carried out as in Test A except that the SFBP Pitch was replaced by a resin of softening point 120°C and asphaltenes content of 46% by weight produced by blowing air through a mixture of propane precipitated asphalt and aromatic extract.

The blend was formed into sheets as before and the sheets were annealed at 140°C for 2 hours. The brittle temperature was determined before and after annealing. The results are shown in Table 3.

Examples 3—5

Experiments were carried out as in Test E but using varying amounts of dioctyl tin dimaleate. The results are shown in Table 3.

## TABLE 3

| Experiment | Dioctyl tin dimaleate (parts by weight) | Brittle temperature | |
|---|---|---|---|
| | | Before annealing (°C) | After annealing (°C) |
| E | 0 | −20 | −12.5 |
| 3 | 0.5 | −20 | −17.5 |
| 4 | 1.0 | −22.5 | −19 |
| 5 | 1.5 | −22.5 | −21 |

The brittle temperature of the blend should be as low as possible so as to facilitate handling of articles e.g. sheets or membranes made from the blend. This is particularly important for example when handling roofing membranes at low temperatures if damage to the membrane is to be avoided. The dialkyl tin dicarboxylate stabilizer is superior to the others in this respect.

It is particularly desirable that the brittle temperature should be −20°C or lower as the maximum brittle temperature allowed by German standards for sheets from PVC (DIN 16733) is −20°C.

### Claims

1. A blend of a chlorine-containing synthetic elastomer, a bituminous material of softening point in excess of 80°C and an asphaltene content in excess of 25% by weight, characterised in that the blend contains a dialkyl tin derivative of a dicarboxylic acid.

2. A blend according to claim 1 which contains chloro-sulphonated polyethylene.

3. A blend according to either one of claims 1 or 2 wherein the blend contains chlorinated polyethylene.

4. A blend according to claim 3 wherein the blend contains chloro-sulphonated polyethylene and chlorinated polyethylene in a weight ratio of 3:1 to 1:3.

5. A blend according to any one of the preceding claims wherein the bituminous material is hardened extract.

6. A blend according to any one of the preceding claims wherein the weight of bituminous material of softening point in excess of 80°C is not less than 75% by weight of the total weight of elastomer.

7. A blend according to claim 6 wherein the weight of bituminous material is not less than 100% by weight of total weight of elastomer.

8. A blend according to any one of the preceding claims wherein the weight of bituminous material of softening point in excess of 80°C is not more than 300% of the total weight of elastomer.

9. A blend according to claim 8 wherein the weight of bituminous material of softening point in excess of 80°C is not more than 200% of the total weight of elastomer.

10. A blend according to any one of the preceding claims wherein the alkyl groups in the tin stabilizer contain from 6 to 10 carbon atoms each.

11. A blend according to any one of the preceding claims wherein the quantity of dialkyl tin derivative of a dicarboxylic acid incorporated into the blend is in the range 0.1 to 5% by weight based on total chlorine-containing synthetic elastomer content.

12. A blend according to claim 11 wherein the quantity is 0.4 to 2% by weight based on total weight of chlorine-containing synthetic elastomer.

13. A water proof sheet made from a composition according to any one of the preceding claims.

14. A process for making a water proof sheet according to claim 13 wherein a composition according to any one of the claims 1 to 12 is formed into a sheet between rollers at a temperature above 90°C.

### Patentansprüche

1. Mischung aus einem chlorhaltigen synthetischen Elastomer und einem bituminösen Material mit einem Erweichungspunkt oberhalb von 80°C und einem Asphalten-Gehalt oberhalb von 25 Gew.-%, dadurch gekennzeichnet, daß die Mischung ein Dialkylzinn-Derivat einer Dicarbonsäure enthält.

2. Mischung nach Anspruch 1, dadurch gekennzeichnet, daß sie chlorosulfoniertes Polyethylen enthält.

3. Mischung nach einem der Ansprüche 1 oder 2, dadurch gekennzeichnet, daß sie chloriertes Polyethylen enthält.

4. Mischung nach Anspruch 3, dadurch gekennzeichnet, daß die chlorosulfoniertes Polyethylen und chloriertes polyethylen in einem Gewichtsverhältnis von 3:1 bis 1:3 enthält.

5. Mischung nach irgendeinem der vorhergehenden Ansprüche, dadurch gekennzeichnet, daß das bituminöse Material gehärteter Extrakt ist.

6. Mischung nach irgendeinem der vorhergehenden Ansprüche, dadurch gekennzeichnet, daß das Gewicht des bituminösen Materials mit dem Erweichungspunkt oberhalb von 80°C nicht weniger als 75 Gew.-% des Gesamtgewichts des Elastomers beträgt.

7. Mischung nach Anspruch 6, dadurch gekennzeichnet, daß daß das Gewicht des bituminösen Materials nicht weniger als 100 Gew.-% des Gesamtgewichts des Elastomers beträgt.

8. Mischung nach irgendeinem der vorhergenenden Ansprüche, dadurch gekennzeichnet, daß das Gewichts des bituminösen Materials mit dem Erweichungspunkt oberhalb von 80°C nicht mehr als 300 Gew.-% des Gesamtgewichts des Elastomers beträgt.

9. Mischung nach Anspruch 8, dadurch gekennzeichnet, daß das Gewicht des bituminösen Materials mit dem Erweichungspunkt oberhalb von 80°C nicht mehr als 200 Gew.-% des Gesamtgewichts des Elaastomers beträgt.

10. Mischung nach irgendeinem der vorhergehenden Ansprüche, dadurch gekennzeichnet, daß die Alkyl-Gruppen in dem Zinn-Stabilisator jeweils 6 bis 10 Kohlenstoff-Atome enthalten.

11. Mischung nach irgendeinem der vorhergehenden Ansprüche, dadurch gekennzeichnet, daß die in die Mischung eingearbeitete Menge des Dialkylzinn-Derivats einer Dicarbonsäure im Bereich

7

von 0,1 bis 5 Gew.-%, bezogen auf den Gesamt-Gehalt an dem chlorhaltigen synthetischen Elastomer, liegt.

12. Mischung nach Anspruch 11, dadurch gekennzeichnet, daß die Menge 0,4 bis 2 Gew.-%, bezogen auf das Gesamt-Gewicht des chlorhaltigen synthetischen Elastomers, beträgt.

13. Wasserdichte Folie, hergestellt aus einer Zusammensetzung nach irgendeinem der vorhergehenden Ansprüche.

14. Verfahren zur Herstellung einer wasserdichten Folie nach Anspruch 13, dadurch gekennzeichnet, daß eine Zusammensetzung nach irgendeinem der Ansprüche 1 bis 12 zwischen Walzen bei einer Temperatur oberhalb von 90°C zu einer Folie geformt wird.

**Revendications**

1. Un mélange d'élastomère chloré synthétique, de substance bitumineuse ayant un point de ramollissement supérieur à 80°C et d'asphaltène dans une proportion de plus de 25% en poids, caractérisé en ce que ce mélange contient un dérivé d'acide décarboxylique ou dialcoyle d'étain.

2. Un mélange selon la revendication 1, qui contient du polyéthylène chlorosulfoné.

3. Un mélange selon l'une des revendications 1 ou 2, qui contient du polyéthylène chloré.

4. Un mélange selon la revendication 3, qui contient du polyéthylène chlorosulfoné et du polyéthylène chloré dans les proportions pondérales de 3:1 et 1:3.

5. Un mélange selon l'une quelconque des revendications précédentes dans lequel la substance bitumineuse est l'extrait durci.

6. Un mélange selon l'une quelconque des revendications précédentes dans lequel le poids de la substance bitumineuse dont le point de ramollissement dépasse 80°C n'est pas inférieur à 75% du poids total de l'élastomère.

7. Un mélange selon la revendication 6, dans lequel la substance bitumineuse ne représente pas moins de 100% du poids total de l'élastomère.

8. Un mélange selon l'une quelconque des revendications précédentes dans lequel le poids de la substance bitumineuse dont le point de ramollissement dépasse 80°C ne représente pas plus de 300% du poids total de l'élastomère.

9. Un mélange selon la revendication 8, dans lequel le poids de la substance bitumineuse dont le point de ramollissement dépasse 80°C ne représente pas plus de 200% du poids total de l'élastomère.

10. Un mélange selon l'une quelconque des revendications précédentes dans lequel les groupes alcoyles du stabilisant à l'étain contiennent chacun de 8 à 10 atomes de carbone.

11. Un mélange selon l'une quelconque des revendications précédentes dans lequel la quantité de dérivé de dialcoyle d'étain d'un acide dicarboxylique introduite dans le mélange est de l'ordre de 0,1 à 5% en poids par rapport au contenu total d'élastomère chloré synthétique.

12. Un mélange selon la revendication 11, dans lequel la quantité est de 0,4 à 2% en poids rapportés au poids total d'élastomère chloré synthétique.

13. Feuille imperméable à l'eau constituée par un mélange selon l'une des revendications 1 à 12.

14. Procédé de fabrication d'une feuille imperméable à l'eau selon la revendication 13, le mélange selon l'une des revendications 1 à 12 étant mis sous la forme d'une feuille par passage entre des rouleaux à une température supérieure à 90°C.